**Europäisches Patentamt**

(19) **European Patent Office**

**Office européen des brevets**

(11) Veröffentlichungsnummer: **0 167 737**

**B1**

(12) # EUROPÄISCHE PATENTSCHRIFT

(45) Veröffentlichungstag der Patentschrift:
12.10.88

(51) Int. Cl.⁴: **H 04 N 5/63**

(21) Anmeldenummer: **85105325.6**

(22) Anmeldetag: **02.05.85**

(54) **Schaltungskonzept für ein Fernsehgerät mit stand-by-Betrieb.**

(30) Priorität: **13.07.84 DE 3425793**

(43) Veröffentlichungstag der Anmeldung:
**15.01.86 Patentblatt 86/3**

(45) Bekanntmachung des Hinweises auf die Patenterteilung:
**12.10.88 Patentblatt 88/41**

(84) Benannte Vertragsstaaten:
**AT CH DE FR GB IT LI NL SE**

(56) Entgegenhaltungen:
**EP-A-0 080 915**
**DE-A-2 711 020**
**DE-B-2 339 583**

(73) Patentinhaber: **Deutsche Thomson- Brandt GmbH, Hermann- Schwer- Strasse 3 Postfach 1307, D-7730 Villingen- Schwenningen (DE)**

(72) Erfinder: **Gleim, Günther, Dipl.- Ing., Terra Wohnpark 8, D-7730 VS- Villingen 24 (DE)**
Erfinder: **Hartmann, Uwe, Ing.- grad, Tallardstrasse 15, D-7730- Villingen- Schwenningen (DE)**
Erfinder: **Koblitz, Rudolf, Dr.- Ing., Eichenstrasse 4, D-7730- Villingen- Schwenningen (DE)**

## Beschreibung

Die Erfindung betrifft eine Schaltungsanordnung nach dem Oberbegriff des ersten Anspruchs.

Bei Fernsehgeräten ist die Leistungsaufnahme im Einschaltmoment wesentlich höher als im normalen Betrieb. Aus diesem Grund wird der Einschaltstrom zum großen Teil aus Kondensatoren genommen, die so dimensioniert sind, daß die Spannung im Einschaltmoment nicht unter den für die Bauteile geforderten Mindestwert abfällt.

Die deutsche Offenlegungsschrift DE-A1-2 711 020 geht von einer vorhandenen Schutzschaltung für Fernsehgeräte aus gemäß dem deutschen Patent DE-C-1 591 712. Hierbei ist das Netzteil ein "hart" ausgelegtes Schaltnetzteil, das in der Lage ist, alle Stufen, die zum Einschalten des Gerätes erforderlich sind, auf Dauer zu treiben. Eine überwachung des Ladezustandes einer Kapazität für den Kurzzeitbetrieb einer Auswerte- und Anlaufschaltung ist nicht erforderlich und auch nicht Gegenstand der Aufgabenstellung. Es ist außerdem ein starres Zeitglied vorgesehen, um eine konstante Einschaltverzögerung bei jedem Einschalten zu erreichen, die konzeptbedingt die Zerstörung oder Beschädigung von Bauteilen vermeidet. Eine solche Lösung ist aufwendig und teuer.

Wie aus den Einzelheiten der oben genannten Offenlegungsschrift, insbesondere Seite 6, zu entnehmen ist, kann diese Lösung nicht der nachstehend angegebenen Problemstellung abhelfen.

Wenn Fernsehgeräte mit stand-by-Betrieb, d. h. fernbedienbarer Bereitschaftschaltung, ausgestattet sind, dann ist es möglich, nur den Fernbedienungssignalverstärker aus einem kleinen Netzteil während dieses Betriebes ständig zu speisen. Ein solcher leistungsarmer stand-by-Betrieb ist dem nach dem Anmeldetag der vorliegenden Anmeldung am 24.10.85 veröffentlichten deutschen Patent DE-C-3 412 341 zu entnehmen. Diese Lösung braucht in der Bereitschaftsphase sehr wenig Leistung. Vorausgesetzt wurde bei dieser Anmeldung, daß die Versorgungsspannung ausreichend hoch ist, wenn das Gerät eingeschaltet wird.

Das kann grundsätzlich erreicht werden, indem das Netzteil für die Versorgung des Gerätes schneller die zum Einschalten erforderliche Mindestspannung bereitstellt als die Auswerteschaltung für codierte Einschaltsignale das Einschaltsignal anlegen kann, oder indem das Gerätenetzteil niederohmig ausgelegt ist und dadurch die Spannung im Einschaltmoment nicht unter den Mindestwert abfallen kann.

Da unmittelbar nach dem Freigeben des Einschaltsignals zunächst hauptsächlich aus dem Kondensator des kleinen stand-by-Netzteils für das Anlaufen des Gerätes Energie entnommen werden kann, könnte durch überdimensionieren dieses Kondensators verhindert werden, daß die Versorgungsspannung für das Gerät unter den genannten Mindestwert zusammenbricht.

Der Erfindung lag deshalb die Aufgabe zu grunde, bei leistungsarmem stand-by-Betrieb das Einschaltverhalten dahingehend zu verbessern, daß die Spannung für den Betrieb des Gerätes und insbesondere die Betriebsspannung für die Anlaufschaltung desselben derart überwacht wird, daß sie im Einschaltmoment nur dann das Einschaltsignal weiterleitet, wenn die Spannung über einem Mindestwert liegt. Andernfalls wird das Einschaltsignal unterdrückt.

Diese Aufgabe wird gemäß der Erfindung durch die im ersten Anspruch aufgeführten Merkmale gelöst.

Weitere Einzelheiten sind einem Unteranspruch und der Beschreibung von Ausführungsbeispielen zu entnehmen.

Erfindungsgemäß wird eine Spannungsüberwachungsschaltung vorgesehen, die die Versorgungsspannung betragmäßig erfaßt, indem sie eine Schwellwerterkennungsschaltung enthält, die so ausgebildet ist, daß sie erst dann das Einschalten des Gerätes zuläßt, wenn ein bestimmter Betrag der Versorgungsspannung überschritten ist. Der Schwellwert, bei dessen überschreiten das Einschaltsignal weitergeleitet wird, muß nicht konstant bleiben. Er kann beispielsweise nach dem Weiterleiten des Einschaltsignals auf einen niedrigeren Wert herabgesetzt werden, der allerdings immer noch über der von den Bauteilen geforderten Mindestspannung liegen muß.

Die Spannungsüberwachungsschaltung kann vor oder nach der Auswerteschaltung mit gleichem Erfolg zugeschaltet sein.

Vorteilhafterweise läßt sich mit dieser Schaltungsanordnung, die mit der Schwellwerterkennungsschaltung ausgestattet ist, ein sehr zuverläßlich arbeitendes Gerät aufbauen, das im stand- by-Betrieb mit einem weichen Netzteil auskommt. Es kann dadurch preisgünstig erstellt werden und hat einen sehr niedrigen Energiebedarf in der Bereitschaftsphase.

Wenn die Schaltung in einen vorhandenen IC-Baustein integriert wird, dann ist der zusätzliche Aufwand vernachlässigbar gering.

In der nachfolgenden Beschreibung wird die Erfindung an hand der Zeichnung erklärt. Die Zeichnung zeigt in

| | |
|---|---|
| Figur 1 | ein Ausführungsbeispiel der Schaltungsanordnung als vereinfachtes Blockschaltbild dargestellt; |
| Figur 2 | Diagramme des Spannungsverlaufs an markierten Punkten der Schaltung, wenn das Gerät mit der Fernbedienung aus seinem stand-by-Betrieb eingeschaltet wird; |
| Figur 3 | Diagramme ähnlich Figur 2, für den Fall der Geräte-Einschaltung mit dem Nahbedienteil; |
| Figur 4 | ein vereinfachtes Blockschaltbild |

ähnlich. Figtur 1 für eine absenkbare Schwelle für Störfälle;

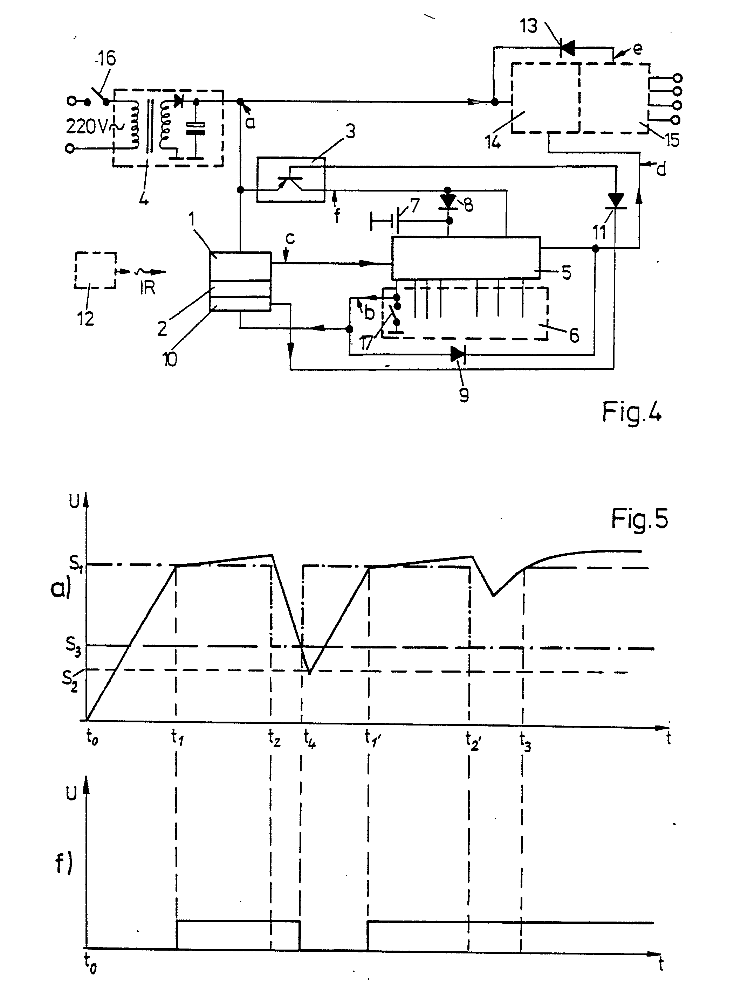

Figur 5 ein entsprechendes Spannungsdiagramm am Punkt a und f bei der Schaltung nach Figur 4.

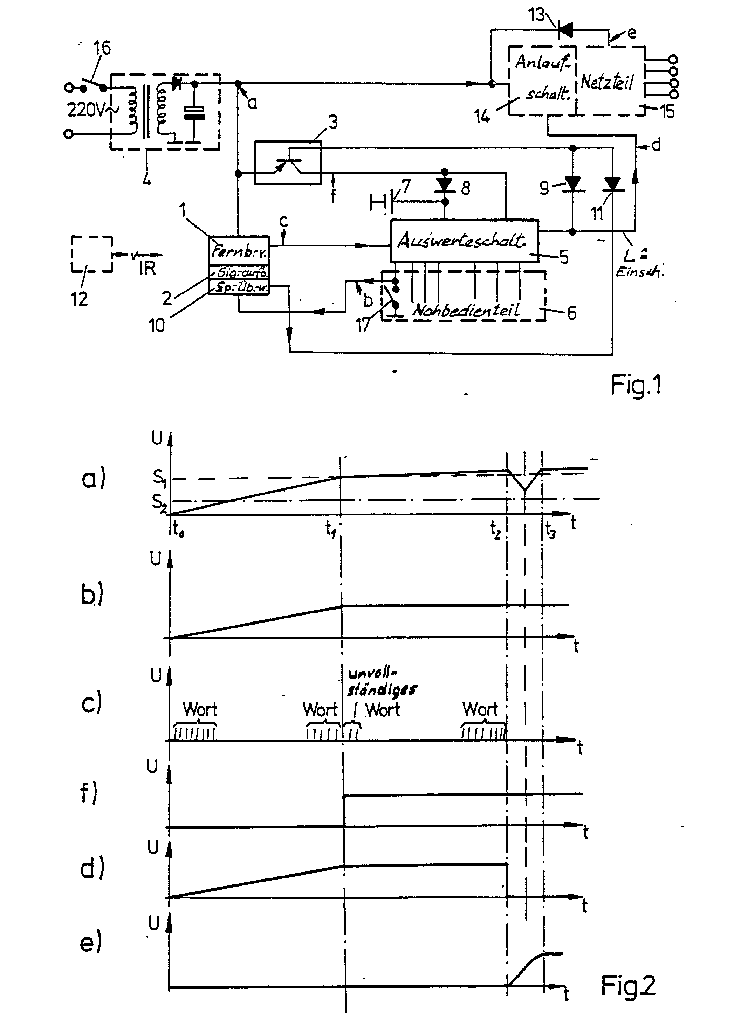

Eine beispielhafte Schaltungsanordnung für ein Fernsehgerät mit fernbedienbarer Bereitschaftsstellung, sogenanntem stand-by-Betrieb, ist in Figur 1 dargestellt. Ein Fernbedienungssignalverstärker 1 ist ständig während des stand-by-Betriebes von einem kleinen Netzteil 4 bei geschlossenem Schalter 16 vom Netz gespeist, während alle anderen Verbraucher noch abgeschaltet sind. Wenn der Fernbedienungssignalverstärker 1 Signale von dem angedeuteten IR-Geber 12 empfängt, gibt er Impulse an eine angeschlossene Auswerteschaltung 5 und an eine Signalaufbereitungsschaltung 2 ab, die den elektronischen Schalter 3 über eine Diode 11 durchschaltet. Dadurch wird die Auswerteschaltung 5 mit Spannung versorgt und prüft die eintreffenden Impulse. Wenn es gemäß Codierung Einschaltimpulse sind, hält sie über eine Diode 9 ihre Spannungsversorgung selbst einerseits aufrecht und gibt andererseits an ihrem Ausgang durch das L-Signal an die Anlaufschaltung 14 (bzw. an das Hauptnetzteil 15) den Einschaltbefehl.

Im anderen Fall wird, falls keine weiteren Impulse vom Fernbedienungssignalverstärker 1 kommen, der Schalter 3 von der Signalaufbereitungsschaltung 2 wieder ausgeschaltet. Dadurch bleibt die Schaltung im stand-by-Betrieb.

Anstatt über die Fernbedienung kann der elektronische Schalter 3 auch vom Nahbedienteil 6 aus aktiviert und damit das Gerät eingeschaltet werden. Die Auswerteschaltung 5 wird über die Spannungsüberwachungsschaltung 10 nach Betätigen des Schalters 17 aktiviert und erkennt dann, daß vom Nahbedienteil 6 aus eingeschaltet wurde. Die Auswerteschaltung 5 hält die Stromversorgung über den elektronischen Schalter 3 aufrecht.

Die erforderliche Energie wird für den Anlaufmoment hauptsächlich von dem Elko des Netzteils 4 aufgebracht, das man aus Kostengründen nicht allzu hart, also nicht höher belastbar auslegen wird.

In Figur 1 ist eine Auswerteschaltung 5 mit Speicherung der zuletzt eingestellten Werte dadurch angedeutet, daß eine Batterie 7 und eine Diode 8 während des stand-by-Betriebes die für die Speicherfunktion erforderliche Mindestspannung liefert. Die Diode 8 schützt vor zu hohem Batterieentladestrom. Beim Einschalten wird diese Spannung über den elektronischen Schalter 3 auf ihren Betriebswert aufgestockt und die Auswerteschaltung 5 aktiviert.

Das einwandfreie Einschalten des Gerätes ist wie zuvor bereits erklärt, nur gewährleistet, wenn vorausgesetzt werden kann, daß die Versorgungsspannung ausreichend hoch ist im Einschaltmoment, also dann, wenn die Anlaufschaltung 14 (bzw. Hauptnetzteil 15) kurzzeitig viel Energie aufnimmt.

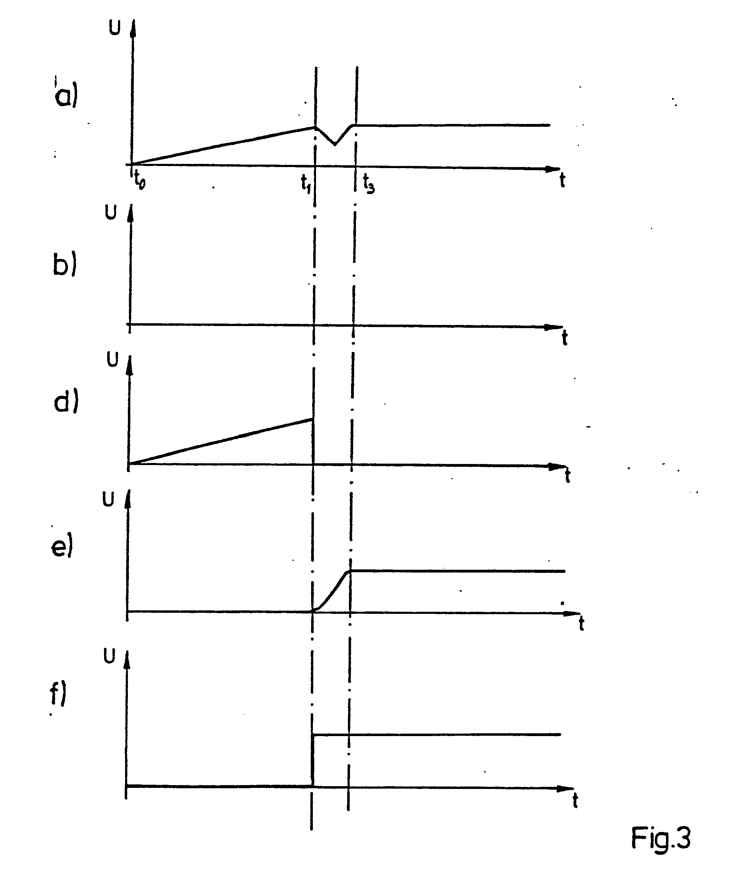

Die kurz erwähnte Spannungsüberwachungsschaltung 10, die nach dieser Erfindung vorgesehen ist, überwacht die Versorgungsspannung des Gerätes, indem sie so aufgebaut und angeschlossen ist, daß sie erst dann das Einschalten des Gerätes zuläßt, wenn ein bestimmter Schwellwert der Betriebsspannung überschritten ist. Dazu wird auf Figur 2 und 3 verwiesen, die Spannungsdiagramme für die im Schaltbild der Figur 1 eingetragenen Stellen a bis f wiedergeben.

Zur Verdeutlichung der zeitlichen Spannungsverläufe zeigen die Figuren 2 und 3 den härtesten Einschaltverlauf. Für das Verständnis der Funktionsweise sind die in den Diagrammen eingetragenen Zeiten wichtig. Die sind:

$t_0$ = Zeitpunkt, bei dem der Netzschalter geschlossen wird und der Einschaltbefehl schon anliegt (IR oder Nahbedienteil);

$t_1$ = Zeitpunkt, bei dem die Stand-by-Betriebsspannung die vorgegebene Schwelle $S_1$ der überwachungsschaltung überschreitet;

$t_2$ = Zeitpunkt, bei dem die Anlaufschaltung angesteuert wird;

$t_3$ = Zeitpunkt, ab dem das Hauptnetzteil das stand-by-Netzteil voll unterstützt.

Die Spannungsüberwachungsschaltung 10 ist mit einer Schwelle $S_1$ ausgestattet, unter deren Wert das Ansteuern der Anlaufschaltung unterdrückt wird.

Bei den in den Figuren 2 und 3 eingetragenen Fällen liegen die Einschaltbefehle schon vor oder zeitgleich mit dem Schliessen des Netzteils an. In Figur 2 handelt es sich bei dem Einschaltbefehl um ein entsprechendes Infrarotsignal, wie es in Figur 2 bei c) angedeutet ist, und in Figur 3 um ein Signal von dem Nahbedienteil 6, Diagramm b), wenn der Schalter 17 geöffnet ist, um das Gerät einzuschalten.

In Figur 2 wird die Auswerteschaltung 5 mit Betriebsspannung versorgt, wenn die Signalaufbereitungsschaltung 2 ein wortverdächtiges Signal erkennt und außerdem die Schwelle in der Spannungsüberwachungsschaltung 10 überschritten wurde ($t_1$).

In Figur 3 wird die Auswerteschaltung 5 mit Betriebsspannung versorgt, sobald die Schwelle $S_1$ in der Spunnungsüberwachungsschaltung 10 überschritten ist (Diagramme a) und f)) ab $t_1$.

Die Ansteuerung der Anlaufschaltung 14 erfolgt gemäß Figur 2 erst nachdem die Auswerteschaltung 5 die entsprechende Codierung des IR-Signals erkannt hat. In Figur 3 erfolgt diese Ansteuerung, sobald die Auswerteschaltung 5 das Signal von dem Nahbedienteil 6 ausgewertet hat.

Wie aus den Diagrammen a) in Figur 2 und 3 erkennbar, bricht die Betriebsspannung durch die momentan erhöhte Stromaufnahme ab $t_2$ etwas zusammen. Sie darf aber bis zu dem Zeitpunkt $t_3$, an dem sie von dem Hauptnetzteil wieder angehoben wird, den für die einwandfreie Funktion der Bauteile geforderten Mindestbetrag nicht überschreiten.

Es sind deshalb im Diagramm a) der Figur 2 folgende Schwellen eingezeichnet:

$S_1$ = Schwelle in der Spannungsüberwachungsschalung 10, unter deren Wert das Ansteuern der Anlaufschaltung 14, unterdrückt wird;

$S_2$ = Schwelle, die nach Ansteuern der Anlaufschaltung 14 nicht unterschritten werden darf, da sonst die stabile normale Arbeitsweise der Bauteile im Gerät fraglich ist.

Die im Anspruch 2 angeführte weitere Ausgestaltung der Erfindung wird in Figur 4 als Beispielfall mit IR-Fernbedienung durch eine Blockschaltung angegeben.

Figur 5 zeigt in den Diagrammen Spannungsverläufe a) und f) der entsprechenden Punkte in Figur 4 für den Fall einer abgesenkten, zeitlich versetzten, zweiten Schwelle der Spannungsüberwachungsschaltung 10, die gegen einen möglichen Störfall absichert. $S_3$ ist der geänderte, abgesenkte Schwellwert. Dieser ist wie auch der Störfall im Diagramm a) eingezeichnet. Er zeigt ein Unterschreiten der Schwelle $S_3$, es wird sogar kurzzeitig die Schwelle $S_2$ unterschritten. Das ist die Grenze der Betriebsspannung, unterhalb welcher der Betrieb der Bauteile unzuverlässig ist. Die Spannung im Diagramm f) wird bei $t_4$ abgeschaltet und wird bei $t_1$, erst wieder angeschaltet, wenn die Betriebsspannung die Schwelle $S_1$ wieder überschritten hat und weiterhin IR-Fernbedienungssignale anliegen.

**Patentansprüche**

1. Schaltungsanordnung für ein Fernsehgerät mit leistungsarmem stand-by-Betrieb, das mit einem Fernbedienungssignalverstärker und mit einem Nahbedienungsteil ausgestattet ist, wobei eine Auswerteschaltung mit ersterem oder beiden zusammenarbeitet, dadurch gekennzeichnet, daß nur der Vorverstärker des Fernbedienungssignalverstärkers (1) ständig von einem kleinen Netzteil (4) bei geschlossenem Schalter (16) gespeist ist und eine Spannungsüberwachungsschaltung (10) vorgesehen ist, die die Versorgungsspannung überwacht und betragmäßig erfaßt, indem sie eine Schwellwerterkennungsschaltung enthält, die so ausgebildet ist, daß sie erst dann das Einschalten des Gerätes zuläßt, wenn ein bestimmter Betrag der Versorgungsspannung überschritten ist.

2. Schaltungsanordnung nach Anspruch 1, dadurch gekennzeichnet, daß die Übertragungskennlinie des Schwellwertes des Schwellwerterkennungsschaltung einen Hysterese-Verlauf hat, bei dem die Schwelle nach dem Weiterleiten des Einschaltsignals selbsttätig auf einen niedrigeren Wert herabgesetzt wird.

**Claims**

1. A circuit arrangement for a television set with low-power stand-by operation, which is equipped with a remote-controlled signal amplifier and with a localcontrol unit, an evaluation circuit cooperating with the former or with both, characterised in that only the preamplifier of the remote-controlled signal amplifier (1) is continuously fed from a small power supply unit (4) with switch (16) closed and a voltage monitoring circuit (10) is provided which monitors the supply voltage and detects it with regard to amount in that it contains a threshold-value recognition circuit which is constructed that it only permits the switching on of the set when a certain value of the supply voltage is exceeded.

2. A circuit arrangement according to Claim 1, characterised in that the transmission characteristic curve of the threshold value of the threshold-value recognition circuit has a hysteresis shape with which the threshold is automatically reduced to a lower value after the switching-on signal has been passed on.

**Revendications**

1. Montage pour un appareil de télévision, qui possède un fonctionnement d'attente consommant une faible puissance et est équipé d'un amplificateur de signaux de télécommande et d'une unité de commande rapprochée, un circuit d'évaluation coopérant avec le premier de ces circuits ou avec ces deux circuits, caractérisé par le fait que seul le préamplificateur de l'amplificateur (1) des signaux de télécommande est alimenté en permanence par un petit bloc d'alimentation réseau (4), lorsque l'interrupteur (16) est fermé, et qu'il est prévu un circuit (10) de contrôle de la tension, qui contrôle et détecte en fonctionnement la tension d'alimentation, par le fait qu'il contient un circuit d'identification à valeur de seuil agencé de telle sorte qu'il n'autorise le branchement de l'appareil que lors du dépassement d'une valeur déterminée de la tension d'alimentation.

2. Montage selon la revendication 1, caractérisé en ce que la courbe caractéristique de transmission de la valeur de seuil du circuit d'identification à valeur de seuil présente un comportement d'hystérésis, pour lequel le seuil est automatiquement réduit à une valeur plus faible, lors de la retransmission du signal de branchement.

Fig.1

Fig.2

Fig.3

Fig.4

Fig.5